# EUROPÄISCHE PATENTANMELDUNG

(11) **EP 0 796 029 A2**
(43) Veröffentlichungstag der Anmeldung: **17.09.1997**
(21) Anmeldenummer: 97250077.1
(22) Anmeldetag: 14.03.1997
(51) Int. Cl.: H04Q 11/04

(54) **Schnittstellenwandler**

(30) Priorität: 14.03.1996 DE 29605533 U
(71) Anmelder: ELMEG GmbH Kommunikationstechnik, D-31228 Peine (DE)
(72) Erfinder: Meyer Andreas, D-38159 Vechelde (DE); Hunfeld Johann, D-31234 Edemissen (DE); Klöpper Dietmar, D-30167 Hannover (DE); Oppermann Thomas, D-38179 Gross Schwülper (DE)
(74) Vertreter: Christiansen, Henning, Dipl.-Ing.

(57) **Zusammenfassung**

Schnittstellenwandler (SW, 8) für eine ISDN-Telekommunikationsanlage, mit einem ersten Anschluß zur Verbindung mit dem ISDN-Netz, einem zweiten Anschluß zur Verbindung mit einem externen Rechner (PC, 7), mindestens einem weiteren Anschluß zur Verbindung mit einem Telekommunikations-Endgerät (9, 10, 11, 12), mindestens einer mit dem ersten Anschluß und dem weiteren Anschluß verbundenen Konvertierungseinheit (35.1, 35.2, 35.3, 35.4) zur Konvertierung eines am ersten Anschluß anliegenden ersten Signals in ein zweites Signal an dem weiteren Anschluß und umgekehrt, mindestens einem mit dem ersten Anschluß verbundenen ersten Signalgeber (33) zur Abgabe einer Dienstekennung (DK) an dem ersten Anschluß, wobei mit dem Signalgeber (33) ein Speicherelement (27.1, 27.2, 27.3, 27.4) zur Speicherung der dem weiteren Anschluß zugeordneten Dienstekennung (DK) verbunden ist und dem zweiten Anschluß eine mit dem Speicherelement (27.1, 27.2, 27.3, 27.4) verbundene Programmiereinheit nachgeschaltet ist zur Programmierung des Speicherelements (27.1, 27.2, 27.3, 27.4) mit einer Dienstekennung (DK) entsprechend einem am zweiten Anschluß anliegenden Programmiersignal.

## Beschreibung

Die Erfindung betrifft einen Schnittstellenwandler für eine ISDN-Telekommunikationsanlage gemäß dem Oberbegriff des Anspruchs 1.

Aus BADACH, A.: ISDN im Einsatz, DATACOM-Verlag 1994, S. 72 ff. ist ein Schnittstellenwandler bekannt, der den Betrieb herkömmlicher analoger Endgeräte am digitalen ISDN-Netz ermöglichen.

Der vorbekannte Schnittstellenwandler wird zwischen die S₀-Schnittstelle eines Netzabschlußgerätes und die herkömmlichen Endgeräte geschaltet und konvertiert die an der S₀-Schnittstelle im ISDN-Format anliegenden digitalen Signale in das Format der Endgeräte. Umgekehrt konvertiert der Schnittstellenwandler die Ausgangssignale der Endgeräte in das digitale ISDN-Format.

Durch die Verwendung derartiger Schnittstellenwandler lassen sich bei einer Neuinstallation eines ISDN-Anschlusses bereits vorhandene, in der Regel analoge Endgeräte weiterhin verwenden.

Zum einen werden dadurch für den Benutzer die Kosten für den Umstieg vom herkömmlichen analogen Telekommunikationsnetz auf das digitale ISDN-Netz gesenkt. Zum anderen wird auf diese Weise die Marktakzeptanz des ISDN-Netzes erhöht.

Im ISDN-Netz übertragen die Endgeräte zusätzlich zu den eigentlichen Gesprächsdaten eine sogenannte Dienstekennung, die die Art des von dem Endgerät unterstützten Telekommunikationsdienstes kennzeichnet. Hierdurch wird sichergestellt, daß nur solche Endgeräte miteinander kommunizieren, die miteinander kompatibel sind, also den gleichen Telekommunikationsdienst unterstützen. So ist beispielsweise zwischen einem FAX-Gerät und einem Bildtelefon keine Verbindung möglich.

Herkömmliche analoge Endgeräte verfügen jedoch nicht über eine derartige Dienstekennung. Beim Betrieb herkömmlicher Endgeräte am ISDN-Netz mittels des vorbekannten Schnittstellenwandlers wird die Dienstekennung deshalb von dem Schnittstellenwandler erzeugt und zusammen mit den Gesprächsdaten über das ISDN-Netz übertragen. Da jedoch nicht alle herkömmlichen Endgeräte zueinander kompatibel sind, ist es sinnvoll, auch für die herkömmlichen Endgeräte individuelle Dienstekennungen zu ermöglichen. Der vorbekannte Schnittstellenwandler ermöglicht deshalb über einen Schalter individuell für jedes angeschlossene Endgerät die Einstellung der gewünschten Dienstekennung.

Der vorbekannte Schnittstellenwandler weist jedoch einige Nachteile auf.

So muß der Benutzer nach dem Anschluß des Schnittstellenwandlers für jedes angeschlossene Endgerät die gewünschte Dienstekennung über jeweils einen Schalter von Hand einstellen und den Schnittstellenwandler auf diese Weise konfigurieren. Hierbei muß der Benutzer jeweils die Zuordnung zwischen der Schalterstellung und der zugehörigen Dienstekennung kennen und beachten.

Die Einstellung der Dienstekennungen ist deshalb, insbesondere bei mehreren Endgeräten, relativ zeitaufwendig. Darüberhinaus besteht bei der Einstellung der Dienstekennungen die Gefahr von Fehleinstellungen, indem der Benutzer eine falsche Zuordnung zwischen der Schalterstellung und der zugehörigen Dienstekennung annimmt.

Aus der DE 43 02 723 Al ist weiterhin ein Schnittstellenwandler bekannt, der den Anschluß von herkömmlichen analogen Endgeräten an das ISDN-Netz ermöglicht, wobei der Schnittstellenwandler bei abgehenden Verbindungen eine Dienstekennung synthetisiert und über den D-Kanal ins ISDN-Netz überträgt. Nachteilig ist hierbei jedoch, daß die Dienstekennung für alle angeschlossenen Endgeräte einheitlich vorgegeben wird.

Der Erfindung liegt also insbesondere die Aufgabe zugrunde, einen Schnittstellenwandler der eingangs beschriebenen Art zu schaffen, der verschiedene Konfigurationen ermöglicht, wobei die Einstellung der gewünschten Konfiguration in möglichst einfacher Weise erfolgen soll.

Die Aufgabe wird durch die im Anspruch 1 enthaltenen Merkmale gelöst.

Die Erfindung schließt die technische Lehre ein, für jedes j an den Schnittstellenwandler anschließbare herkömmliche Endgerät ein Speicherelement insbesondere zur Aufnahme von für dieses Endgerät oder den jeweiligen Anschluß an dem Schnittstellenwandler spezifischen Daten vorzusehen und eine Möglichkeit zu schaffen, den Inhalt dieser Speicherelemente insbesondere durch einen externen Steuerrechner auszulesen oder zu ändern.

Der erfindungsgemäße Schnittstellenwandler ermöglicht den Anschluß herkömmlicher, in der Regel analoger Endgeräte an das ISDN-Netz. Die Verwendung des erfindungsgemäßen Schnittstellenwandlers ist hierbei nicht auf das eigentliche normgemäße ISDN-Netz beschränkt ist. Vielmehr kann der Schnittstellenwandler auch für das sogenannte Euro-ISDNNetz oder andere digitale Kommunikationsnetze ausgelegt werden.

Zum Anschluß an das ISDN-Netz weist der Schnittstellenwandler einen ersten Anschluß auf. Der Anschluß kann wahlweise direkt oder indirekt unter Zwischenschaltung eines Netzabschlußgerätes erfolgen.

In einer Variante der Erfindung wird der Schnittstellenwandler deshalb an die S₀-Schnittstelle eines Netzabschlußgerätes angeschlossen, das wiederum über die U_{K0}-Schnittstelle mit einer Ortsvermittlungsstelle (DIVO - digitale Vermittlungsstelle Ortsnetz) verbunden ist. In dieser Variante der Erfindung ist der Aufbau des Schnittstellenwandlers relativ einfach und dementsprechend eine kostengünstige Herstellung möglich, da das Netzabschlußgerät separat ausgeführt ist. Darüberhinaus ist eine Weiterverwendung eines bereits vorhandenen Netzabschlußgerätes möglich.

In einer anderen Variante der Erfindung ist das Netzabschlußgerät in den Schnittstellenwandler integriert. Der Schnittstellenwandler wird deshalb direkt an die Ortsvermittlungsstelle angeschlossen. Durch die Integration des Netzabschlußgerätes in den Schnittstellenwandler entfällt vorteilhaft die für ein separates Netzabschlußgerät erforderliche eigene Stromversorgung sowie ein Gehäuse. Darüberhinaus entfällt die bei einem separaten Netzabschlußgerät erforderliche Verkabelung zwischen Schnittstellenwandler und Netzabschlußgerät.

Weiterhin weist der erfindungsgemäße Schnittstellenwandler mindestens einen Anschluß zur Verbindung mit einem Telekommunikations-Endgerät auf. Da in der Regel herkömmliche analoge Endgeräte an den Schnittstellenwandler angeschlossen werden, weisen diese Anschlüsse vorzugsweise eine standardisierte TAE-Buchse auf.

Das Übertragungsformat des ISDN-Netzes ist nicht kompatibel zum dem Datenformat herkömmlicher Endgeräte. So werden die Daten im ISDN-Netz digital übertrageben, im herkömmlichen Fernsprechnetz dagegen analog.

Bei dem erfindungsgemäßen Schnittstellenwandler ist deshalb den Anschlüssen zur Verbindung mit einem herkömmlichen Endgerät eine Konvertierungseinheit vorgeschaltet, die das an dem ersten Anschluß anliegende erste Signal in ein zweites Signal an dem Anschluuß zur Verbindung mit einem herkömmlichen Endgerät konvertiert und umgekehrt. Die Konvertierungseinheit sorgt also für eine Anpassung der Datenformate der herkömmlichen Endgeräte an das Datenformat des ISDN-Netzes und umgekehrt.

Zur Abgabe der Dienstekennung weist der Schnittstellenwandler einen Signalgeber auf, der mit dem ersten Anschluß verbunden ist und bei einer Verbindung die Dienstekennung über diesen Anschluß überträgt.

Zur Speicherung der Dienstekennung ist mit dem Signalgeber ein Speicherelement verbunden. Der Signalgeber liest also die Dienstekennung vor der Übertragung aus dem Speicherelement aus. Wichtig ist in diesem Zusammenhang, daß jedem Anschluß zur Verbindung mit einem Endgerät ein Speicherelement zugeordnet ist. Die Speicherelemente können hierbei separat ausgeführt sein oder jeweils einen Speicherplatz eines Speicherbausteins bilden.

Weiterhin ist ein Anschluß zur Verbindung des Schnittstellenwandlers mit einem externen Rechner vorgesehen. Dieser Anschluß ermöglicht die Programmierung der Speicherelemente mit den gewünschten Dienstekennungen und ist deshalb mit einer Programmiereinheit verbunden. Zur Programmierung der Speicherelemente überträgt der externe Rechner ein Programmiersignal, das die Dienstekennungen für bestimmte Speicherelemente definiert. Die Programmiereinheit wertet dieses Programmiersignal aus und schreibt die entsprechende Dienstekennung in das gewünschte Speicherelement.

Der erfindungsgemäße Schnittstellenwandler ermöglicht vorteilhaft eine rechnergesteuerte Konfigurierung der Dienstekennungen. Hierbei braucht der Benutzer für die Anschlüsse des Schnittstellenwandlers lediglich die gewünschte Dienstekennung am Rechner einzugeben. Das zur Einstellung der gewünschten Dienstekennung erforderliche Programmiersignal wird dann automatisch vom Rechner erzeugt und zum Schnittstellenwandler übertragen. Im Gegensatz zu dem vorbekannten Schnittstellenwandler besteht also nicht die Gefahr einer Verwechslung der Zuordnung zwischen einer gewünschten Dienstekennung und der zugehörigen Schalterstellung zur Einstellung der Dienstekennung. Darüberhinaus ermöglicht die Konfigurierung durch einen externen Rechner vorteilhaft eine benutzerfreundliche Bedienung.

Da die meisten Rechner serienmäßig über eine serielle Schnittstelle (V.24 bzw. RS-232) oder eine parallle Schnittstelle verfügen, ist dem Anschluß zur Verbindung mit dem externen Rechner vorzugsweise ein Schnittstellenbaustein vorgeschaltet, der die Anpassung an eine serielle bzw. parallele Schnittstelle vornimmt.

Im ISDN-Netz können die an einem ISDN-Anschluß angeschlossenen Endgeräte individuell angewählt werden, indem der Anrufer der Rufnummer des ISDN-Anschlusses eine sogenannte Endgeräte-Auswahl-Ziffer (EAZ) nachstellt. Jedem normalen ISDN-Endgerät ist deshalb eine Endgeräte-Auswahl-Ziffer zugeordnet, die bei einem eingehenden Anruf mit der von dem Anrufer gewählten Endgeräte-Auswahl-Ziffer verglichen wird.

Die herkömmlichen, in der Regel analogen Endgeräte verfügen jedoch nicht über die Möglichkeit der individuellen Adressierung durch die Endgeräte-Auswahl-Ziffer. Es ist jedoch wünschenswert, bei einem Betrieb mehrerer herkömmlicher Endgeräte an dem Schnittstellenwandler jedes dieser Endgeräte individuell durch eine Endgeräte-Auswahl-Ziffer anwählen zu können.

Der Schnittstellenwandler weist deshalb in einer vorteilhaften Variante der Erfindung von eigener schutzwürdiger Bedeutung für jeden Anschluß zur Verbindung mit einem herkömmlichen Endgerät ein Speicherelement zur Speicherung der diesem Anschluß zugeordneten Endgeräte-Auswahl-Ziffer auf. Diese Speicherelemente können wahlweise separat ausgeführt sein oder verschiedene Speicherplätze eines einzigen Speicherbaustein bilden. In diesem Fall ist es auch möglich, die Speicherelemente zur Speicherung der Dienstekennungen mit den Speicherelementen zur Speicherung der Endgeräte-Auswahl-Ziffern zusammenzufassen. Jedem Anschluß zur Verbindung mit einem herkömmlichen Endgerät sind dann vorzugsweise zwei Speicherplätze eines Speicherbausteins zugeordnet, von denen der eine die Dienstekennung und der andere die Endgeräte-Auswahl-Ziffer dieses Anschlusses enthält.

Darüberhinaus weist der Schnittstellenwandler in dieser Variante der Erfindung eine Vergleichereinheit auf, die zum einen mit dem ersten Anschluß und zum anderen mit den Speicherelementen zur Speicherung der Endgeräte-Auswahl-Ziffer verbunden ist. Bei der Anwahl des ISDN-Anschlusses durch einen externen Teilnehmer kann dieser der Rufnummer des ISDN-Anschlusses die Endgeräte-Auswahl-Ziffer des gewünschten Endgerätes angeben, die dann zusammen mit dem Wählsignal übertragen wird. Die Vergleichereinheit liest deshalb die von dem anrufenden Teilnehmer gewünschte Endgeräte-Auswahl-Ziffer aus dem ersten Anschluß aus und vergleicht sie mit den in den Speicherelementen abgespeicherten Endgeräte-Auswahl-Ziffern. An ihrem Ausgang gibt die Vergleichereinheit dann ein Signal aus, das kennzeichnet, bei welchem Anschluß die abgespeicherte Endgeräte-Auswahl-Ziffer mit der von dem anrufenden Teilnehmer gewünschten Endgeräte-Auswahl-Ziffer übereinstimmt.

Weiterhin verfügt der Schnittstellenwandler in dieser Variante der Erfindung über eine Adressierungseinheit, die mit dem ersten Anschluß und den Konvertierungseinheiten verbunden ist und in Abhängigkeit von dem Ausgangssignal der Vergleichereinheit die Verbindung herstellt zwischen dem ersten Anschluß und einer der Konvertierungseinheiten. Die Adressierungseinheit schaltet also den ersten Eingang auf diejenige Konvertierungseinheit, die dem durch die Endgeräte-Auswahl-Ziffer ausgewählten Anschluß vorgeschaltet ist.

In einer vorteilhaften Ausführungsform dieser Variante der Erfindung ist die Programmiereinheit auch mit den Speicherelementen zur Speicherung der Endgeräte-Auswahl-Ziffern verbunden. Hierdurch wird eine Programmierung der Endgeräte-Auswahl-Ziffern durch den externen Rechner ermöglicht.

Im ISDN-Netz wird auf Antrag des Anschlußinhabers während jeder Verbindung ein Gebührensignal übertragen, das die Zahl der während der aktuellen Verbindung angefallenen Gebühreneinheiten wiedergibt.

In einer vorteilhaften Weiterbildung der Erfindung ist die Programmiereinheit deshalb zusätzlich mit dem ersten Anschluß verbunden, um das Gebührensignal auszulesen. Die Ausgabe des Gebührensignals bzw. der daraus berechneten Gebührensumme erfolgt dann wahlweise durch Übertragung zu dem externen Rechner oder direkt durch Ausgabe auf einem an dem Schnittstellenwandler angebrachten Display.

Bei einer ISDN-Telekommunikationsanlage sind die verschiedenen ISDN-Endgeräte jeweils an eine sogenannte ISDN-Anschlußeinheit (IAE) angeschlossen, die über einen durchgehenden Datenbus mit dem Netzabschlußgerät verbunden sind. Zur Verhinderung störender Signalreflexionen muß der Datenbus auf der dem Netzanschlußgerät abgewandten Seite durch einen sogenannten Netzabschlußwiderstand abgeschlossen sein.

In einer vorteilhaften Ausführungsform der Erfindung ist der Netzabschlußwiderstand in den Schnittstellenwandler integriert. Hierdurch entfällt vorteilhaft der separate Netzabschlußwiderstand. Der Schnittstellenwandler muß dann lediglich hinter der letzten ISDN-Anschlußeinheit an den mit dem Netzabschlußgerät verbundenen Datenbus angeschlossen sein.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 die Anordnung des erfindungsgemäßen Schnittstellenwandlers in einer als Blockschaltbild dargestellten ISDN-Telekommunikationsanlage,
Figur 2 den Schnittstellenwandler aus Figur 1 detailliert als Blockschaltbild sowie
Figur 3 den Schnittstellenwandler aus den vorstehend genannten Figuren in perspektivischer Darstellung.

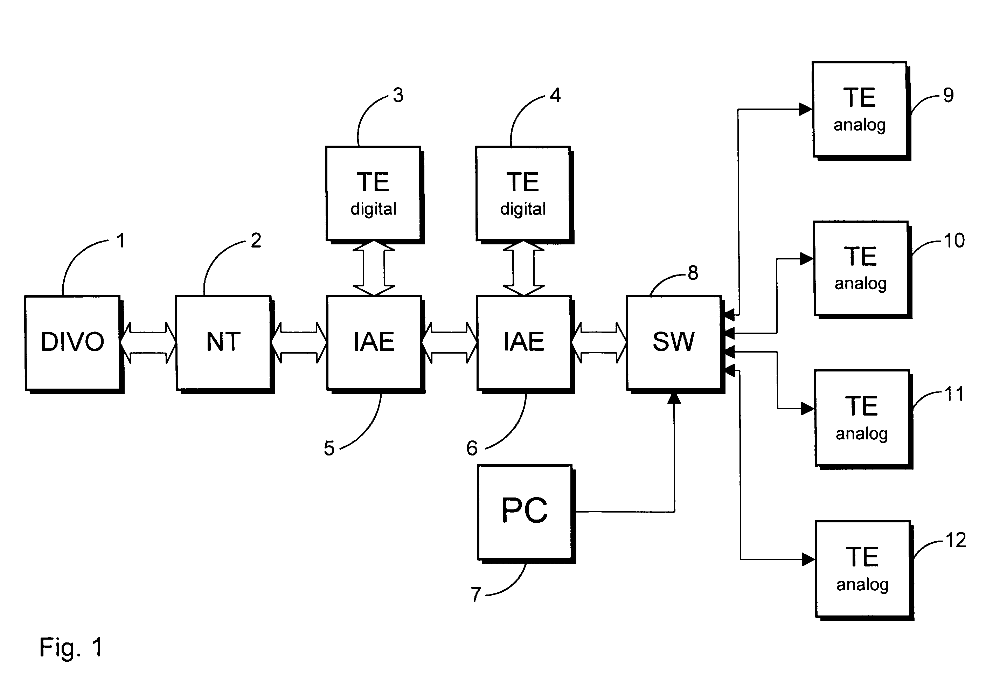

Die in Figur 1 dargestellte Telekomunikationsanlage ermöglicht den Betrieb sowohl von ISDN-Endgeräten 3, 4 als auch von herkömmlichen analogen Telekommunikations-Endgeräten 9, 10, 11, 12 am ISDN-Netz.

Die Telekommunikationsanlage ist über ein Netzabschlußgerät (NT) 2 mit einer digitalen Ortsvermittlungsstelle (DIVO) 2 verbunden, die die Verbindung zu anderen ISDN-Teilnehmern oder zu anderen Kommunikationsnetzen ermöglicht. Das Netzabschlußgerät (NT) 2 bildet also die Schnittstelle zwischen der Telekommunikationsanlage des Benutzers und dem ISDN-Netz. Hierzu verfügt das Netzabschlußgerät (NT) 2 netzseitig über eine sogenannte U_{K0}-Schnittstelle und benutzerseitig über eine sogenannte S₀-Schnittstelle.

An die S₀-Schnittstelle des Netzabschlußgeräts (NT) 2 sind über jeweils eine ISDN-Anschlußeinheit (IAE) 5, 6 zwei ISDN-kompatible Telekommunikations-Endgeräte (TA digital) 3, 4 angeschlossen. Weiterhin ist dem Netzabschlußgerät (NT) ) 2 der erfindungsgemäße Schnittstellenwandler (SW) 8 nachgeschaltet, der mit vier herkömmlichen analogen Telekommunikationsendgeräten (TE analog) 9, 10, 11, 12 verbunden ist und die Konvertierung der am Netzabschlußgerät (NT) 2 eintreffenden digitalen Daten in das herkömmliche analoge Format bzw. die Konvertierung aus dem herkömmlichen analogen Format in das digitale ISDN-Format durchführt.

Der Schnittstellenwandler (SW) 8 ist mit einem externen Rechner (PC) 7 verbunden, der unter anderem die Konfigurierung des Schnittstellenwandlers (SW) 8 ermöglicht.

Eine Konfigurierungsmöglichkeit betrifft die Einstellung der sogenannten Endgeräte-Auswahl-Ziffer. So kann ein Anrufer eines ISDN-Anschlusses jedes der angeschlossenen ISDN-Endgeräte individuell anwählen, indem er der Rufnummer des ISDN-Anschlusses die Endgeräte-Auswahl-Ziffer des gewünschten Telekommunikations-Endgerätes nachstellt. Der Anruf wird dann von dem Endgerät angenommen, dem die gewünschte Endgeräte-Auswahl-Ziffer zugeordnet ist. Die Endgeräte-Auswahl-Ziffer kann bei ISDN-Endgeräten beispielsweise durch einen Schalter manuell eingestellt werden. Die an den Schnittstellenwandler (SW) angeschlossenen herkömmlichen Endgeräte 9, 10, 11, 12 verfügen jedoch nicht über diese Möglichkeit. Es ist jedoch auch beim Betrieb mehrerer herkömmlicher Endgeräte 9, 10, 11, 12 an dem Schnittstellenwandler (SW) 8 wünschenswert, jedes dieser Endgeräte - wie bei normalen ISDN-Endgeräten - individuell durch eine Endgeräte-Auswahl-Ziffer anwählen zu können. Der Schnittstellenwandler (SW) 8 ordnet deshalb jedem der herkömmlichen Endgeräte 9, 10, 11, 12 eine Endgeräte-Auswahl-Ziffer zu. Bei einem eingehenden Anruf nimmt der Schnittstellenwandler (SW) 8 die vom Anrufer gewünschte Endgeräte-Auswahl-Ziffer auf und leitet den Anruf an das herkömmliche Endgeräte 9, 10, 11, 12 weiter, dem die vom Anrufer gewünschte Endgeräte-Auswahl-Ziffer zugeordnet ist.

Es besteht also die Möglichkeit, den Schnittstellenwandler (SW) 8 zu konfigurieren, indem jedem Anschluß zur Verbindung mit einem herkömmlichen Endgerät 9, 10, 11, 12 eine beliebige Endgeräte-Auswahl-Ziffer zugeordnet wird.

Eine weitere Konfigurierungsmöglichkeit betrifft die Einstellung der sogenannten Dienstekennung.

Im ISDN-Netz wird bei einem Anruf zusätzlich zu den eigentlichen Gesprächsdaten eine sogenannte Dienstekennung übertragen, die die Art des Telekommunikationsdienstes kennzeichnet und unter anderem einen Verbindungsaufbau zwischen inkompatiblen Endgeräten verhindert. So ist beispielsweise eine Verbindung zwischen einem Bildtelefon und einem FAX-Gerät nicht sinnvoll. Die Dienstekennung kann an einem ISDN-Gerät beispielsweise durch einen Schalter eingestellt werden.

Bei den herkömmlichen analogen Endgeräten 9, 10, 11, 12 besteht diese Möglichkeit nicht. Es ist jedoch auch beim Betrieb mehrerer analoger Endgeräte an einem Schnittstellenwandler sinnvoll, die Art des von dem jeweiligen Endgerät unterstützten Telekommunikationsdienstes durch eine Dienstekennung zu kennzeichnen und damit einen Verbindungsaufbau zwischen inkompatiblen Endgeräten zu verhindern.

Der Schnittstellenwandler (SW) 8 ordnet deshalb jedem Anschluß zur Verbindung mit einem herkömmlichen analogen Endgerät 9, 10, 11, 12 eine Dienstekennung zu, die bei einem von diesem Anschluß ausgehenden Anruf übertragen wird und dem angerufenen Teilnehmer eine Identifizierung des gewünschten Telekommunikationsdienstes ermöglicht.

Der Schnittstellenwandler (SW) 8 kann also konfiguriert werden, indem die Zuordnung zwischen den Anschlüssen zur Verbindung mit den herkömmlichen analogen Endgeräten 9, 10, 11, 12 und den jeweiligen Dienstekennungen über den externen Rechner umprogrammiert wird.

Darüberhinaus können über den externen Rechner (PC) 7 die während einer Verbindung anfallenden Gebühren überwacht werden. So wird im ISDN-Netz von der Ortsvermittlungsstelle (DIVO) 1 ein Gebührensignal übertragen, das die Zahl der während einer Verbindung angefallenen Gebühreneinheiten wiedergibt. Dieses Gebührensignal kann von dem externen Rechner (PC) 7 ausgelesen und ausgewertet werden.

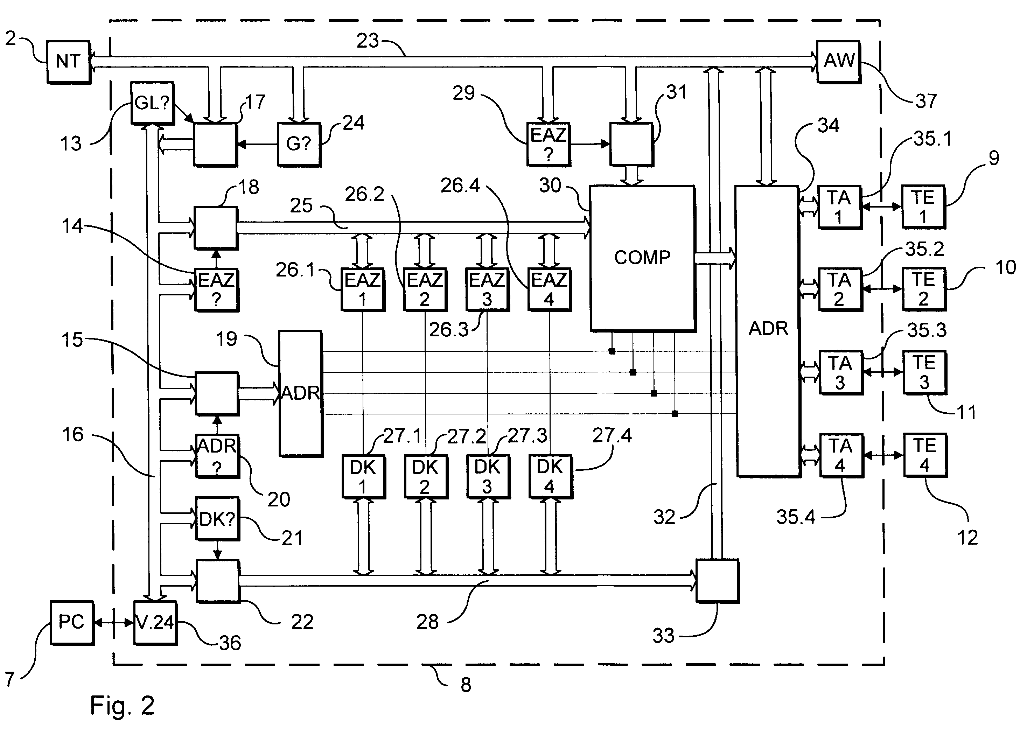

Figur 2 zeigt den Aufbau des Schnittstellenwandlers 8 detailliert als Blockschaltbild.

Der Schnittstellenwandler 8 ist über einen Datenbus 23 mit dem Netzabschlußgerät (NT) 2 verbunden. Bei einem eingehenden Anruf wird über diesen Datenbus 23 zusätzlich zu der Rufnummer des ISDN-Anschlusses die von dem Anrufer gewünschte Endgeräte-Auswahl-Ziffer (EAZ) übertragen. Da über den Datenbus 23 verschiedene Daten übertragen werden, wird der eigentlichen Endgeräte-Auswahl-Ziffer zur Unterscheidung ein Nachrichtenkopf vorangestellt, der die Art der folgenden Daten kennzeichnet.

Mit dem Datenbus 23 ist eine Erkennungseineit 29 verbunden, die den Datenstrom auf dem Datenbus laufend mit dem Nachrichtenkopf vergleicht, der die Übertragung einer Endgeräte-Auswahl-Ziffer ankündigt. Wird ein solcher Nachrichtenkopf erkannt, so aktiviert die Erkennungseinheit 29 über eine Steuerleitung ein ebenfalls mit dem Datenbus verbundenes Halteglied 31, das die Endgeräte-Auswahl-Ziffer aus dem Datenbus 23 ausliest und zwischenspeichert.

Weiterhin weist der Schnittstellenwandler 8 vier Speicherelemente 26.1, 26.2, 26.3, 26.4 auf zur Speicherung der den Anschlüssen zugeordneten Endgeräte-Auswahl-Ziffern.

Die von dem Anrufer gewünschte und in dem Halteglied 31 zwischengespeicherte Endgeräte-Auswahl-Ziffer wird dann einer Vergleichereinheit 30 zugeführt, die die gewünschte Endgeräte-Auswahl-Ziffer mit den in den Speicherelementen 26.1, 26.2, 26.3, 26.4 abgespeicherten Endgeräte-Auswahl-Ziffern vergleicht. Hierzu adressiert die Vergleichereinheit 30 über jeweils eine Steuerleitung nacheinander die vier Speicherelemente 26.1, 26.2, 26.3, 26.4, die daraufhin die abgespeicherte Endgeräte-Auswahl-Ziffer auf einen mit der Vergleichereinheit 30 verbundenen Datenbus 25 legen. Die Vergleichereinheit 30 erzeugt dann in Abhängigkeit von dem Vergleich ein Signal, daß den der gewünschten Endgeräte-Auswahl-Ziffer zugeordneten Anschluß kennzeichnet und führt dieses Signal einer Adressierungseinheit 34 zu. Die Adressierungseinheit 34 ist einerseits mit dem Datenbus 25 und andererseits über jeweils eine Konvertierungseinheit 35.1, 35.2, 35.3, 35.4 mit jeweils einem Anschluß zur Verbindung mit einem herkömmlichen analogen Endgerät 9, 10, 11, 12 verbunden. Die Adressierungseinheit 34 schaltet den Datenbus 23 dann in Abhängigkeit von dem Ausgangssignal der Vergleichereinheit 30 auf eine der Konvertierungseinheiten 35.1, 35.2, 35.3, 35.4 durch. Die Konvertierungseinheiten 35.1, 35.2, 35.3, 35.4 konvertieren dann das auf dem Datenbus 23 anliegende ISDN-Signal in ein analoges Signal für die herkömmlichen Endgeräte 9, 10, 11, 12 und umgekehrt die analogen Signale der herkömmlichen Endgeräte 9, 10, 11, 12 in ein digitales ISDN-Signal.

Geht von einem der herkömmlichen Endgeräte 9, 10, 11, 12 ein Anruf aus, so wird das von diesem Endgerät ausgehende Signal zunächst von der diesem Endgerät zugeordneten Konvertierungseinheit 35.1, 35.2, 35.3 bzw. 35.4 in ein digitales ISDN-Signal umgewandelt und der Adressierungseinheit 34 zugeführt. Die Adressierungseinheit 34 schaltet dieses digitale ISDN-Signal dann auf den Datenbus 23 durch.

Darüberhinaus verfügt der Schnittstellenwandler 8 über vier weitere Speicherelemente 27.1, 27.2, 27.3, 27.4 zur Speicherung der Dienstekennungen (DK) für jeweils einen der Anschlüsse zur Verbindung mit den herkömmlichen Endgeräten 9, 10, 11, 12. Jedes dieser Speicherelemente 27.1, 27.2, 27.3, 27.4 ist also einem herkömmlichen Endgerät 9, 10, 11, 12 zugeordnet.

Bei einem ausgehenden Anruf erkennt die Adressierungseinheit 34, von welchem Anschluß der Anruf ausgeht und gibt über eine Steuerleitung an das diesem Anschluß zugeordnete Speicherelement 27.1, 27.2, 27.3 bzw. 27.4 ein SchreibSignal. Daraufhin legt das so angesteuerte Speicherelement die gespeicherte Dienstekennung auf einen Datenbus 28, der unter anderem mit einem Signalgeber 33 verbunden ist. Der Signalgeber 33 liest die Dienstekennung aus dem Datenbus 28 aus und überträgt sie über den mit dem Netzabschlußgerät (NT) 2 verbundenen Datenbus 23.

Weiterhin verfügt der Schnittstellenwandler 8 über eine serielle Datenschnittstelle (V.24) 36 zur Konfigurierung des Schnittstellenwandlers 8 über einen externen Rechner (PC) 7. Der Rechner 7 ermöglicht die Programmierung der Speicherelemente 26.1, 26.2, 26.3, 26.4 zur Aufnahme der Endgeräte-Auswahl-Ziffern sowie der Speicherelemente 27.1, 27.2, 27.3, 27.4 zur Speicherung der Dienstekennungen.

Zur Programmierung einer Endgeräte-Auswahl-Ziffer wird zunächst ein Nachrichtenkopf übertragen, der dem Schnittstellenwandler 8 ankündigt, daß die folgenden Daten eine Endgeräte-Auswahl-Ziffer darstellen. Dieser Nachrichtenkopf wird über die Datenschnittstelle (V.24) 36 auf einen Datenbus 16 gelegt, der unter anderem mit einer Erkennungseinheit 14 verbunden ist. Die Erkennungseinheit 14 vergleicht den Datenstrom auf dem Datenbus 16 laufend mit dem Nachrichtenkopf, der die Übertragung einer Endgeräte-Auswahl-Ziffer ankündigt. Ist dies der Fall, so steuert die Erkennungseinheit 14 ein ebenfalls mit dem Datenbus 16 verbundenes Halteglied 18 an, das die Endgeräte-Auswahl-Ziffer aus dem Datenbus 16 ausliest und zwischenspeichert.

Anschließend wird in der gleichen Weise eine Dienstekennung übertragen. Zunächst wird also über die Datenschnittstelle (V.24) 36 ein Nachrichtenkopf auf den Datenbus 16 gelegt, der die Übertragung einer Dienstekennung ankündigt. Anschließend wird dann die Dienstekennung selber übertragen. Mit dem Datenbus 16 ist eine weitere Erkennungseinheit 21 verbunden, die den Datenstrom auf dem Datenbus 16 mit dem Nachrichtenkopf vergleicht, der die Übertragung einer Dienstekennung ankündigt. Wird ein solcher Nachrichtenkopf von der Erkennungseinheit 21 detektiert, so steuert diese ein ebenfalls mit dem Datenbus 16 verbundenes Halteglied 22 an, das die Dienstekennung zwischenspeichert.

Nach diesem Vorgang sind also in den beiden Haltegliedern 18 bzw. 22 die zu programmierende Endgeräte-Auswahl-Ziffer bzw. die zu programmierende Dienstekennung enthalten. Es ist jedoch noch nicht bekannt, in welche Speicherelemente diese Daten geschrieben werden sollen.

Der externe Rechner 7 überträgt deshalb anschließend ein Adreßsignal, das angibt, in welches Speicherelement 26.1, 26.2, 26.3, 26.4 bzw. 27.1, 27.2, 27.3, 27.4 die zwischengespeicherten Daten geschrieben werden sollen. Hierzu wird - analog zur Übertragung der Endgeräte-Auswahl-Ziffer bzw. der Dienstekennung - zunächst ein Nachrichtenkopf übertragen, der die folgende Übertragung des Adreßsignals ankündigt. Dieser Nachrichtenkopf wird von einer mit dem Datenbus verbundenen Erkennungseinheit 20 erkannt. Die Erkennungseinheit 20 steuert dann ein weiteres, ebenfalls mit dem Datenbus 16 verbundenes Halteglied 15 an, das daraufhin das Adreßsignal aus dem Datenbus 16 ausliest und zwischenspeichert.

Das zwischengespeicherte Adreßsignal wird dann einer Adressierungseinheit 19 zugeführt, die eines der Speicherelemente 26.1, 26.2, 26.3 bzw. 26.4 zur Speicherung der Endgeräte-Auswahl-Ziffern (EAZᵢ) mit einem Lese-Befehl ansteuert. Das auf diese Weise angesteuerte Speicherelement liest dann die zu programmierende Endgeräte-Auswahl-Ziffer aus dem Halteglied 18 aus. Darüberhinaus steuert die Adressierungseinheit 19 eines der Speicherelemente 27.1, 27.2, 27.3, 27.4 zur Speicherung der Dienstekennungen mit einem Lesebefehl an, das daraufhin die zu programmierende Dienstekennung aus dem entsprechenden Halteglied 22 ausliest und dauerhaft speichert.

Auf diese Weise können sämtliche Speicherelemente 26.1, 26.2, 26.3, 26.4 bzw. 27.1, 27.2, 27.3, 27.4 zur Speicherung der Endgeräte-Auswahl-Ziffern bzw. zur Speicherung der Dienstekennungen programmiert werden, indem zunächst die gewünschte Endgeräte-Auswahl-Ziffer und die gewünschte Dienstekennung und anschließend die Adresse des zu programmierenden Speicherelements übertragen wird.

Darüberhinaus können über den externen Rechner 7 die während einer Verbindung anfallenden Gebühren abgefragt werden. So überträgt die Ortsvermittlungsstelle - wie bereits zuvor erläutert - während einer Verbindung ein Gebührensignal, das die Zahl der während dieser Verbindung angefallenen Gebühreneinheiten wiedergibt. Der Schnittstellenwandler 8 weist deshalb eine weitere Erkennungseinheit 24 auf, die den Datenstrom auf dem mit dem Netzabschlußgerät 2 verbundenen Datenbus 23 mit dem Muster eines Gebührensignals vergleicht. Wird ein solches Gebührensignal von der Erkennungseinheit 24 detektiert, so gibt diese einen Lese-Befehl an ein ebenfalls mit dem Datenbus 23 verbundenes Halteglied 17, das daraufhin das Gebührensignal aus dem Datenbus 23 ausliest und zwischenspeichert.

Soll nun das Gebührensignal aus dem Schnittstellenwandler 8 ausgelesen werden, so überträgt der externe Rechner 7 über die Datenschnittstelle (V.24) 36 einen Lese-Befehl zum Schnittstellenwandler 8, der von einer mit dem Datenbus 16 verbundenen Erkennungseinheit 13 detektiert wird. Die Erkennungseinheit 13 gibt dann über eine Steuerleitung einen Schreib-Befehl an das Halteglied 17, das das Gebührensignal enthält. Das zwischengespeicherte Gebührensignal wird dann auf den Datenbus 16 gelegt und über die Datenschnittstelle (V.24) 36 übertragen.

An dem dem Netzabschlußgerät 2 abgewandten Ende des Datenbuses 23 ist dieser durch einen Netzabschlußwiderstand (AW) 37 abgeschlossen. Hierdurch werden Signalreflexionen am Ende des Datenbuses 23 verhindert, die die Datenübertragung stören könnten.

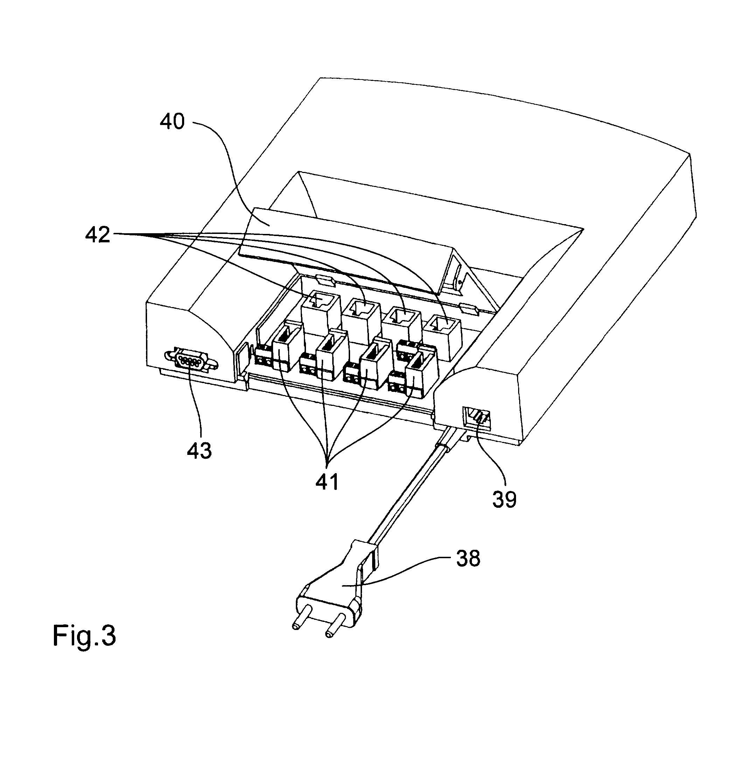

Figur 3 zeigt den vorstehend beschriebenen Schnittstellenwandler in perspektivischer Ansicht.

Der Schnittstellenwandler ist in einem aus Kunststoff bestehenden Gehäuse untergebracht, das an der Oberseite eine Vertiefung aufweist, in der unter einer Klappe 40 insgesamt acht Buchsen 41, 42 zum Anschluß von Telekommunikations-Endgeräten angeordnet sind. Wegen der vertieften Anordnung sind die Buchsen 41, 42 vorteilhaft vor Beschädigung geschützt. Wenn keine Endgeräte an den Schnittstellenwandler angeschlossen sind, können die Buchsen 41, 42 durch die Klappe 40 abgedeckt werden und stören dann das optische Erscheinungsbild nicht mehr.

Vier dieser Buchsen dienen - wie in der beschreibung zu Figur 2 erläutert - zum Anschluß herkömmlicher analoger Endgeräte wie beispielsweise Telefone oder Faxgeräte. Diese Buchsen 41 sind nebeneinander in einer Reihe angeordnet.

Darüberhinaus können an den Schnittstellenwandler vier digitale ISDN-Endgeräte angeschlossen werden. Die Buchsen 42 zum Anschluß dieser Endgeräte sind ebenfalls in einer Reihe hinter den Buchsen 41 für die herkömmlichen analogen Endgeräte angeordnet.

Weiterhin ist in dem Gehäuse eine Buchse 43 zum Anschluß eines externen Rechners angeordnet, über den - wie in der Beschreibung zu Figur 2 erläutert - der Schnittstellenwandler konfiguriert werden kann. Darüberhinaus können über den externen Rechner die während einer Verbindung anfallenden Gebühren erfasst werden.

Der Anschluß des Schnittstellenwandlers an das Netzabschlußgerät erfolgt über eine weitere, ebenfalls in dem Gehäuse angeordnete Buchse 39.

Zur Stromversorgung des Schnittstellenwandlers ist in dem Gehäuse ein Transformator angeordnet, der über ein Stromkabel 38 mit dem normalen Stromnetz verbunden werden kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Schnittstellenwandler (SW, 8) für eine ISDN-Telekommunikationsanlage, mit
einem ersten Anschluß zur Verbindung mit dem ISDN-Netz,
einem zweiten Anschluß zur Verbindung mit einem externen Rechner (PC, 7),
mindestens einem weiteren Anschluß zur Verbindung mit einem Telekommunikations-Endgerät (9, 10, 11, 12),
mindestens einer mit dem ersten Anschluß und dem weiteren Anschluß verbundenen Konvertierungseinheit (35.1, 35.2, 35.3, 35.4) zur Konvertierung eines am ersten Anschluß anliegenden ersten Signals in ein zweites Signal an dem weiteren Anschluß und umgekehrt,
mindestens einem mit dem ersten Anschluß verbundenen ersten Signalgeber (33) zur Abgabe einer Dienstekennung (DK) an dem ersten Anschluß,
**dadurch gekennzeichnet,**
daß mit dem Signalgeber (33) ein Speicherelement (27.1, 27.2, 27.3, 27.4) zur Speicherung der dem weiteren Anschluß zugeordneten Dienstekennung (DK) verbunden ist,
daß dem zweiten Anschluß eine mit dem Speicherelement (27.1, 27.2, 27.3, 27.4) verbundene Programmiereinheit nachgeschaltet ist zur Programmierung des Speicherelements (27.1, 27.2, 27.3, 27.4) mit einer Dienstekennung (DK) entsprechend einem am zweiten Anschluß anliegenden Programmiersignal.

2. Schnittstellenwandler nach Anspruch 1, **dadurch gekennzeichnet,**
daß mehrere weitere Anschlüsse zur Verbindung mit jeweils einem Telekommunikations-Endgerät (9, 10, 11, 12) vorgesehen sind, wobei jedem der weiteren Anschlüsse eine Endgeräte-Auswahl-Ziffer (EAZ) zugeordnet ist,
daß für jeden der weiteren Anschlüsse jeweils ein Speicherelement (26.1, 26.2, 26.3, 26.4) vorgesehen ist zur Speicherung der Endgeräte-Auswahl-Ziffer (EAZ) und/oder der Dienstekennung (DK) des Anschlusses,
daß mehrere weitere, jeweils mit einem der weiteren Anschlüsse verbundene Konvertierungseinheiten (35.1, 35.2, 35.3, 35.4) vorgesehen sind,
daß eine mit dem ersten Anschluß und den Speicherelementen (26.1, 26.2, 26.3, 26.4) verbundene Vergleichereinheit (34) vorgesehen ist zum Vergleich einer am ersten Anschluß anliegenden Endgerätekennung mit den in den Speicherelementen (26.1, 26.2, 26.3, 26.4) abgespeicherten Endgeräte-Auswahl-Ziffern (EAZ) und zur Erzeugung eines Adreßsignals in Abhängigkeit von dem Vergleich,
daß der Vergleichereinheit (34) eine mit dem ersten Anschluß und den Konvertierungseinheiten (35.1, 35.2, 35.3, 35.4) verbundene Adressierungseinheit (34) nachgeschaltet ist zur Weiterleitung des an dem ersten Anschluß anliegenden ersten Signals an eine der Konvertierungseinheiten (35.1, 35.2, 35.3, 35.4) in Abhängigkeit von dem Adreßsignal.

3. Schnittstellenwandler nach Anspruch 2, **dadurch gekennzeichnet**, daß die Programmiereinheit zur Programmierung der Endgeräte-Auswahl-Ziffern (EAZ) und/oder der Dienstekennungen (DK) mit den Speicherelementen (26.1, 26.2, 26.3, 26.4, 27.1, 27.2, 27.3, 27.4) verbunden ist.

4. Schnittstellenwandler nach einem der vorhergehenden Ansprüche, **dadurch gekennzeichnet,** daß das erste Signal ein Digitalsignal und das zweite Signal ein Analogsignal ist.

5. Schnittstellenwandler nach einem der vorhergehenden Ansprüche, **dadurch gekennzeichnet**, daß die Programmiereinheit zur Erfassung eines Gebührensignals mit dem ersten An) schluß verbunden ist.

6. Schnittstellenwandler nach einem der vorhergehenden Ansprüche, **dadurch gekennzeichnet,** daß ein Gehäuse mit einer Gehäusevertiefung vorgesehen ist und mehrere Anschlüsse zum Schutz vor Beschädigung in der Gehäusevertiefung angeordnet sind.

7. Schnittstellenwandler nach einem der vorhergehenden Ansprüche, **gekennzeichnet durch** einen dem zweiten Anschluß nachgeschalteten Schnittstellenbaustein (36) zum Anschluß an eine serielle (V.24) oder parallele Schnittstelle des externen Rechners (7).

8. Schnittstellenwandler nach einem der vorhergehenden Ansprüche, **dadurch gekennzeichnet,** daß dem ersten Anschluß zur Anpassung an eine digitale Vermittlungsstelle ein Netzabschlußgerät nachgeschaltet ist.

9. Schnittstellenwandler nach einem der vorhergehenden Ansprüche, **dadurch gekennzeichnet,** daß dem ersten Anschluß ein Netzabschlußwiderstand (AW, 37) nachgeschaltet ist zur Verhinderung störender Signalreflexionen.
